# EUROPEAN PATENT APPLICATION

(11) **EP 2 570 022 A1**
(43) Date of publication of application: **20.03.2013**
(21) Application number: 12394006.6
(22) Date of filing: 17.09.2012
(51) Int. Cl.: A01F 15/07

(54) **A baler and a combined baler/bale wrapper**

(30) Priority: 16.09.2011 IE 20110419
(71) Applicant: McHale, Padraic Christopher, Clonbur Galway (IE); McHale, Martin William, Kilmaine Mayo (IE)
(72) Inventor: McHale, Padraic Christopher, Clonbur, Galway (IE); McDermott, Karol Angelo, Moville, Donegal (IE); McHale, Paul Gerard, Woodquay, Galway (IE); Biggins, John Patrick, Cornfield,Mayo (IE); Heaney, James John, Ballyglass, mayo (IE); Collins, Donal Patrick, Knockatee, Galway (IE); Cunniffe, Eamonn Edward Michael, Falmore,Roscommon (IE); Warren, John Alexander, Munninane, Sligo (IE); Killeen, Terence Patrick, Redhill, Mayo (IE); Lohan, Gerald Anthony, Lakelands Upper, Mayo (IE); Sheridan, Gerard Patrick, Tullyduff, Mayo (IE); McHale, Martin William, County Mayo (IE)
(74) Representative: Gorman, Francis Fergus

(57) **Abstract**

A combined baler/bale wrapper (1) comprises a chassis (3) supported on ground engaging wheels (5), a baler (6) mounted forwardly on the chassis (3), and a two-axis bale wrapper (7) mounted on the chassis (3) rearwardly of the baler (6) for wrapping a bale from the baler (6). The baler (6) comprises a lower part (9) comprising spaced apart opposite lower fixed wall segments (20) and lower moveable wall segments (21) and a plurality of bale rotating rollers (15) extending between the lower fixed and moveable wall segments (20,21). An upper part (10) comprising a pair of spaced apart upper moveable wall segments (19) having bale rotating rollers (15) extending therebetween is pivotally coupled about a first pivot axis (22) to the lower first part (9) between first and second states to define a bale forming chamber (12) of respective different volumes to produce cylindrical bales of respective different diameters. A bridging roller (25) which is carried on a pair of spaced apart carrier plate members (26) is urgeable from an idle state when the bale forming chamber (12) is of the first volume into a bridging state when the bale forming chamber (12) is of the second volume bridging between the first and second parts so that the bridging roller (25) defines with the bale rotating rollers (15) of the first and second parts (9,10) the bale forming chamber (12) of the second volume.

## Description

The present invention relates to a baler for forming material into a cylindrical bale, and in particular, though not limited to an agricultural baler for baling fodder material, such as silage, hay, straw and the like. The invention also relates to a combined baler/bale wrapper, and in particular, though not limited to a combined baler/bale wrapper of the type for forming and wrapping a cylindrical bale of fodder material, such as silage, hay, straw and the like.

Agricultural balers for baling silage, hay, straw and the like into cylindrical bales, which are commonly referred to as round bales are well known. Typically, such cylindrical bales are of diameter which ranges from 1,250mm to 1,500mm and of axial length in the order of 1,250mm. Such agricultural balers can be categorised broadly into three categories, one category being the type of baler which is referred to as a belt baler and comprises a plurality of belts which are arranged to form a bale forming chamber the diameter of which increases as the bale is being formed therein. A second type of baler is commonly referred to as a fixed chamber baler or a roller baler, in which a bale forming chamber is defined by a series of rotatably mounted bale rotating rollers which are configured to define the circumferential periphery of the bale forming chamber. As material is being delivered into the bale forming chamber, the rotational action of the bale rotating rollers urges the material around the bale forming chamber to eventually form a bale, which is then rotated within the bale forming chamber by the bale rotating rollers. As further material is delivered into the bale forming chamber, the bale is compressed therein by the bale rotating rollers. The third type of such balers is a combination between the belt and fixed chamber balers, where part of the bale forming chamber is defined by one or more bale rotating rollers, and the remaining part of the bale forming chamber is formed by belts.

In general, belt type balers, be they exclusively belt balers or balers which comprise a combination of one or more bale rotating rollers and belts, permit adjustment of the diameter to which the cylindrical bale is formed, and in general are referred to as variable chamber balers. However, in fixed chamber balers, the diameter to which the bale is formed is fixed. This is a disadvantage of fixed chamber balers, since in many cases it is desirable, depending on the type of fodder material to be baled, to vary the diameter to which a cylindrical bale is to be formed.

There is therefore a need for an agricultural baler which addresses this problem.

The present invention is directed towards providing an agricultural baler for forming fodder material into a bale, and the invention is also directed towards a baler for forming any type of material suitable for baling into a cylindrical bale. The invention is also directed towards a combined baler/bale wrapper for forming and wrapping a cylindrical bale of material.

According to the invention there is provided a baler for forming material into a cylindrical bale, the baler comprising a first part and a second part, the first and second parts defining a substantially cylindrical bale forming chamber within which a bale is formed, wherein one of the first part and the second part is moveable relative to the other one of the first part and the second part between a first state defining with the said other one of the first part and the second part the bale forming chamber of a first volume, and a second state defining with the said other one of the first part and the second part the bale forming chamber of a second volume, the second volume being greater than the first volume, and a third part is provided, and is moveable into a bridging state located between the first part and the second part when the one of the first and second parts is in the second state to define a portion of the bale forming chamber of the second volume.

In one embodiment of the invention the first and second parts define respective portions of the circumferential periphery of the bale forming chamber, and the first and second parts define a gap in the circumferential periphery of the bale forming chamber when the moveable one of the first and second parts is in the second state, the third part being adapted to define a portion of the circumferential periphery of the bale forming chamber adjacent the gap in the bridging state, and preferably, the third part defines the portion of the circumferential periphery of the bale forming chamber extending along substantially the axial length of the bale forming chamber.

In one embodiment of the invention the third part comprises an elongated bridging element adapted to extend along substantially the entire axial length of the bale forming chamber, which ideally, extends adjacent the circumferential periphery of the bale forming chamber, and preferably, the third part comprises a rotatably mounted bridging roller.

In another embodiment of the invention the third part is moveable between an idle state and the bridging state. Preferably, the third part is moveable from the idle state to the bridging state in response to the moveable one of the first and second parts being in the second state.

Preferably, a first urging means is provided for urging the third part into the bridging state, and advantageously, the first urging means comprises one of a spring means and a drive means. Advantageously, the spring means comprises one of a pneumatic spring, an hydraulic accumulator, a compression spring and a tension spring. In another embodiment of the invention the drive means comprises one of a pneumatic ram and an hydraulic ram.

In one embodiment of the invention a second urging means is provided for urging the third part from the bridging state to the idle state, and advantageously, the second urging means comprises a camming means, which preferably, is co-operable between the third part and one of the first and second parts, and advantageously, is co-operable between the third part and the moveable one of the first and second parts. Advantageously, the camming means comprises a camming element operably coupled to the one of the first and second parts, and a cam follower element operably coupled to the third part and co-operable with the camming element so that on the moveable one of the first and second parts being moved into the first state, the third part is urged into the idle state.

In another embodiment of the invention the third part is pivotally coupled to one of the first part and second part, and preferably, is pivotally coupled to the one of the first and second parts which is not the moveable one of the first and second parts.

In one embodiment of the invention the third part is carried on a pivotally mounted carrier means, and preferably, the carrier means is co-operable with the first and second urging means for urging the third part between the idle state and the bridging state.

In one embodiment of the invention the moveable one of the first and second parts is moveable relative to the other one of the first and second parts into at least one intermediate state between the first and second states with the moveable one of the first and second parts defining with the other one of the first and second parts the bale forming chamber of at least one corresponding intermediate volume, each intermediate volume being of value lying between the values of the first volume and the second volume.

Preferably, the third part is provided in at least two parts, and advantageously, the two parts of the third part are independently urgeable into the bridging state to define respective portions of the bale forming chamber of the different volumes.

Preferably, the third part comprises at least one rotatably mounted bridging roller, and advantageously, each part of the third part comprises a rotatably mounted bridging roller.

In another embodiment of the invention the moveable one of the first and second parts is moveable from the first state through the second state to a third state to provide access to the bale forming chamber for discharging a formed bale from the bale forming chamber. Preferably, a first drive means is provided for urging the moveable one of the first and second parts between the first, second and third states.

Advantageously, the second part defines approximately 180° of the circumferential periphery of the bale forming chamber when the moveable one of the first and second parts is in the first state, and advantageously, the first part defines approximately 180° of the circumferential periphery of the bale forming chamber when the moveable one of the first and second parts is in the first state.

In one embodiment of the invention a plurality of rotatably mounted bale rotating rollers are carried on the first and second parts, the bale rotating rollers of the first part and the second part defining the respective portions of the circumferential periphery of the bale forming chamber.

In another embodiment of the invention one of the bale rotating rollers of the first part defines with an adjacent one of the bale rotating rollers on the second part the gap in the circumferential periphery of the bale forming chamber when the moveable one of the first and second parts is in the second state.

Preferably, the bridging roller or the at least one bridging roller is locatable in the gap in the circumferential periphery defined by the first and second parts, and the bridging roller or the at least one bridging roller extends parallel to the bale rotating rollers in the bridging state. Advantageously, the bale rotating rollers are of similar diameter, and preferably, the bridging roller or the at least one bridging roller is of diameter substantially similar to the diameter of the bale rotating rollers, and advantageously, each bridging roller is of diameter substantially similar to the diameter of the bale rotating rollers.

In another embodiment of the invention a portion of the one of the first and second parts which is not the moveable one of the first and second parts comprises a discharge means for discharging a formed bale from the bale forming chamber.

The invention also provides a combined baler/bale wrapper, comprising the baler according to the invention and a bale wrapper, the bale wrapper being disposed relative to the baler for receiving a formed bale from the baler.

Advantageously, the baler is mounted on a chassis, and the bale wrapper is mounted on the chassis.

The advantages of the baler according to the invention are many. A particularly important advantage of the baler according to the invention is that cylindrical bales of two different diameters and in some cases more than two different diameters can be selectively produced by the baler. When the moveable one of the first and second parts of the baler is in the first state with the first and second parts defining the bale forming chamber of the first volume, a cylindrical bale of a first diameter is produced. When the moveable one of the first and second parts of the baler is in the second state defining the bale forming chamber of the second volume, the cylindrical bale produced is of a second diameter which is greater than the first diameter of the cylindrical bale produced when the bale forming chamber is of the first volume. In cases when the moveable one of the first and second parts of the baler is in an intermediate state defining the bale forming chamber of an intermediate volume which lies between the first and second volumes, the cylindrical bale produced is of a diameter which is different to the diameter of the bale produced when the movable one of the first and second parts is in either the first state or the second state, and in the intermediate state of the moveable one of the first and second parts the diameter of the bale is of value which lies between the diameters of the bales produced when the moveable one of the first and second parts is in the first state and the second state, respectively. The provision of the third part substantially completes the circumferential periphery of the bale forming chamber when the first and second parts together with the third part defines the bale forming chamber of the second volume, thereby permitting the cylindrical bale of the second diameter to be formed. The provision of the third part in at least two parts which are independently moveable into the bridging state allows the circumferential periphery of the bale forming chamber to be completed independently by one or both of the two parts of the third part depending on whether the moveable one of the first and second parts is in the second state or in at least one of the intermediate states.

When the first and second parts are provided with bale rotating rollers, in order to provide the baler as a roller baler, a particularly important advantage is achieved, since the baler according to the invention when configured as a roller baler can produce bales of different diameters, which has not been possible with roller balers known heretofore, since roller balers known heretofore defined a bale forming chamber of fixed volume. Roller balers, due to local conditions in certain regions, are better suited for baling certain agricultural crops than belt balers or balers which include a combination of belts and rollers, and accordingly, the baler according to the invention when configured as a roller baler now allows cylindrical bales of different diameters to be produced. This is a particularly important advantage in such locations where roller balers are more suited to baling agricultural crops due to the local conditions.

The invention will be more clearly understood from the following description of a preferred embodiment thereof, which is given by way of example only, with reference to the accompanying drawings, in which:
Fig. 1 is a side elevational view of a combined baler/bale wrapper according to the invention comprising a baler also according to the invention,
Fig. 2 is a cross-sectional side elevational view of the combined baler/bale wrapper of Fig. 1,
Fig. 3 is a view similar to that of Fig. 2 of the combined baler/bale wrapper of Fig. 1 with a portion of the baler in a different state to that of Fig. 2,
Fig. 4 is a view similar to that of Fig. 2 of the combined baler/bale wrapper of Fig. 1 with a portion of the baler in a further different state to that of Fig. 2,

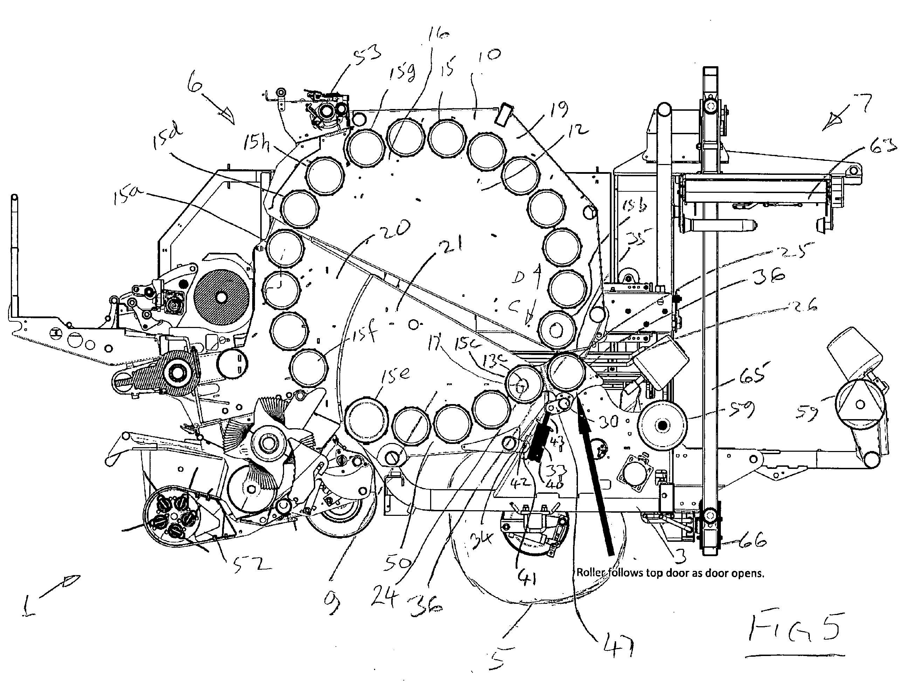

Fig. 5 is a view similar to that of Fig. 2 of the combined baler/bale wrapper of Fig. 1 with a portion of the baler in a still further different state to that of Fig. 2,

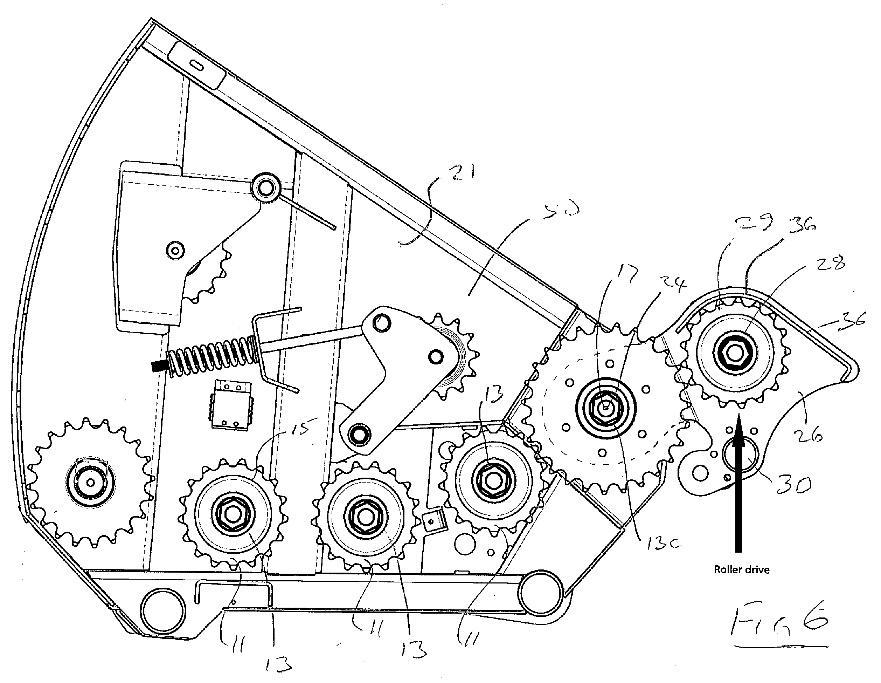

Fig. 6 is a side elevational view of a portion of the baler of the combined baler/bale wrapper of Fig. 1,
Figs. 7(a) and 7(b) are side elevational views of a portion of the baler of the combined baler/bale wrapper of Fig. 1,
Figs. 8(a) and 8(b) are side elevational views of a detail of the portion of Figs. 6(a) and 6(b) of the baler of the combined baler/bale wrapper of Fig. 1,
Fig. 9 is a side elevational view of a portion of the baler of the combined baler/bale wrapper of Fig. 1 with a portion of the baler illustrated in the state of Fig. 2,
Fig. 10 is a view similar to Fig. 9 of a combined baler/bale wrapper of Fig. 1 with portion of the baler in the state illustrated in Fig. 3,

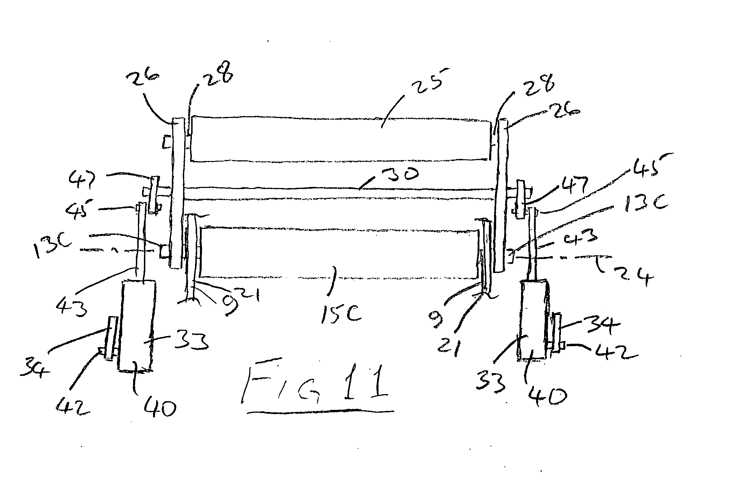

Fig. 11 is an end elevational view of a portion of the baler of the combined baler/bale wrapper of Fig. 1, and
Fig. 12 is a block representation of an hydraulic and control circuit of the baler of the combined baler/bale wrapper of Fig. 1.

Referring to the drawings, there is illustrated a combined baler/bale wrapper according to the invention, indicated generally by the reference numeral 1, for forming and wrapping a cylindrical bale of fodder material, for example, silage, hay, straw and the like. The combined baler/bale wrapper 1 is substantially similar to the baler/bale wrappers which are disclosed in PCT published Application Specification No. WO 02/076183, and a description of the details of the combined baler/bale wrapper should not be required. Accordingly, it is intended to describe only the aspects of the combined baler/bale wrapper 1 which are relevant to the present invention.

The combined baler/bale wrapper 1 is particularly suitable for towing behind a tractor (not shown) or other suitable prime mover, and comprises a chassis 3 which is supported on two ground engaging wheels 5. The combined baler/bale wrapper 1 comprises a roller baler also according to the invention and indicated generally by the reference numeral 6 mounted on the chassis 3 for forming the fodder material into a cylindrical bale. A two-axis bale wrapper 7 is mounted on the chassis 3 for wrapping the bale with wrapping film of plastics material, which in general is opaque, and typically black or green in colour, having one side coated with a self-adhesive coating. Such wrapping film for wrapping bales of forage material, such as silage, will be well known to those skilled in the art. The baler 6 and the bale wrapper 7 are mounted on the chassis 3 with the bale wrapper 7 located rearwardly of the baler 6 for sequentially receiving and wrapping formed bales from the baler 6.

The baler 6 comprises a lower first part 9 and an upper second part 10 which together define a bale forming chamber 12 within which the cylindrical bales of fodder material are sequentially formed. The lower first part 9 defines a lower part of the bale forming chamber 12, while the upper second part 10 defines the upper part of the bale forming chamber 12. A pair of spaced apart end walls 14, which are provided in segments as will be described in more detail below, define axially opposite ends of the bale forming chamber 12. The segments of the end walls 14 as will be described below rotatably carry a plurality of bale rotating rollers 15 which are rotatable about respective parallel rotational axes 17. The bale rotating rollers 15 extend between the segments of the end walls 14 and define with the end walls 14 the bale forming chamber 12. The bale forming chamber 12 defines a longitudinally extending main central geometrical axis 18 about which a bale is rotated in the bale forming chamber 12. The main central axis 18 extends substantially parallel to the rotational axes 17 of the bale rotating rollers 15, and substantially transversely of the normal direction of forward motion of the baler/bale wrapper 1.

The bale rotating rollers 15 are configured to define the circumferential periphery 16 of the bale forming chamber 12. The bale rotating rollers 15 of the lower first part 9 define approximately 180° of the circumferential periphery 16 of the bale forming chamber 12, while the bale rotating rollers 15 of the upper second part 10 also define approximately 180° of the circumferential periphery 16 of the bale forming chamber 12. The bale rotating rollers 15 are rigidly mounted on shafts 13 which are rotatably carried in bearings (not shown) in the end walls 14. The bale rotating rollers 15 are rotatable in the bearing (not shown) about the respective rotational axes 17. Sprockets 11 on the shafts 13 of the bale rotating rollers 15 are driven by a chain drive (not shown) for rotating the bale rotating rollers 15 in the direction of the arrows A for in turn rotating a bale being formed in the bale forming chamber 12 in the direction of the arrow B.

Each end wall 14 comprises an upper wall segment 19, a lower fixed wall segment 20 and a lower moveable wall segment 21. The upper wall segments 19 of the respective end walls 14 form with the corresponding bale rotating rollers 15 which are carried on the upper wall segments 19, the upper second part 10 of the baler 6. The fixed wall segments 20 and the lower moveable wall segments 21 of the respective end walls 14 form with the corresponding bale rotating rollers 15 which are rotatably carried in the lower fixed wall segments 20 and the lower moveable wall segments 21, the lower first part 9 of the baler 6. The lower fixed wall segments 20 are rigidly secured to the chassis 3.

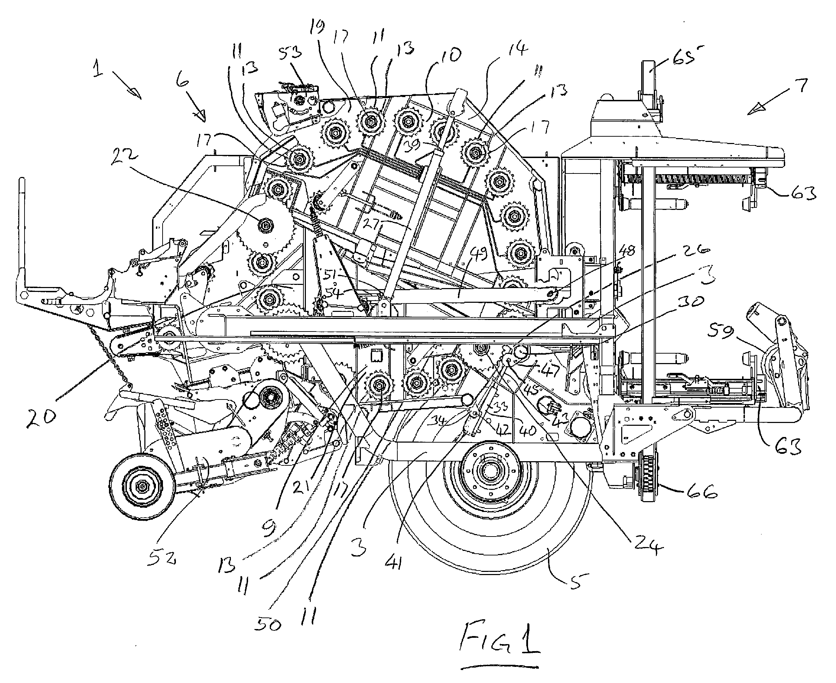

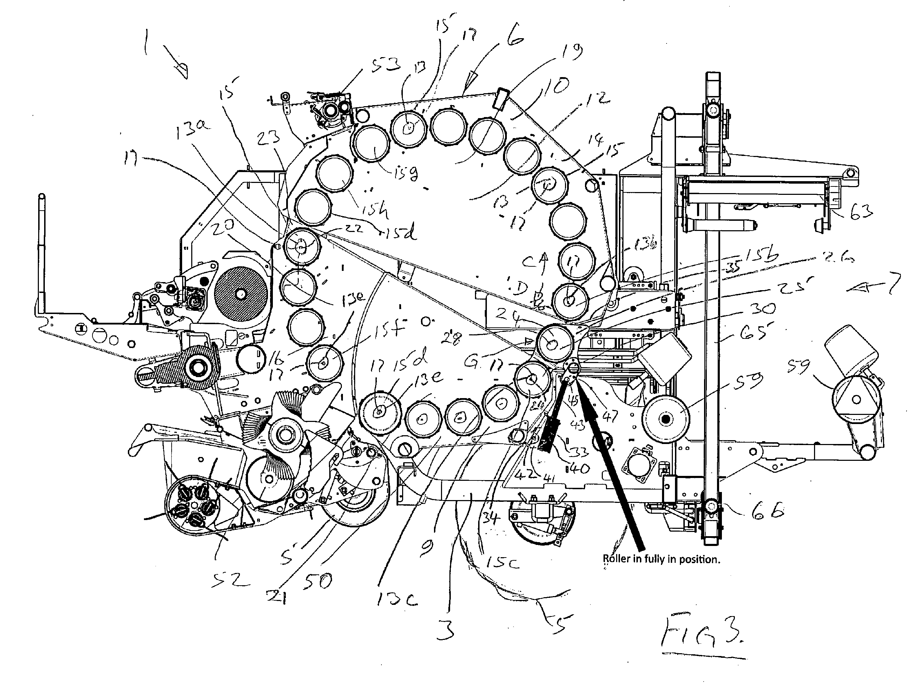

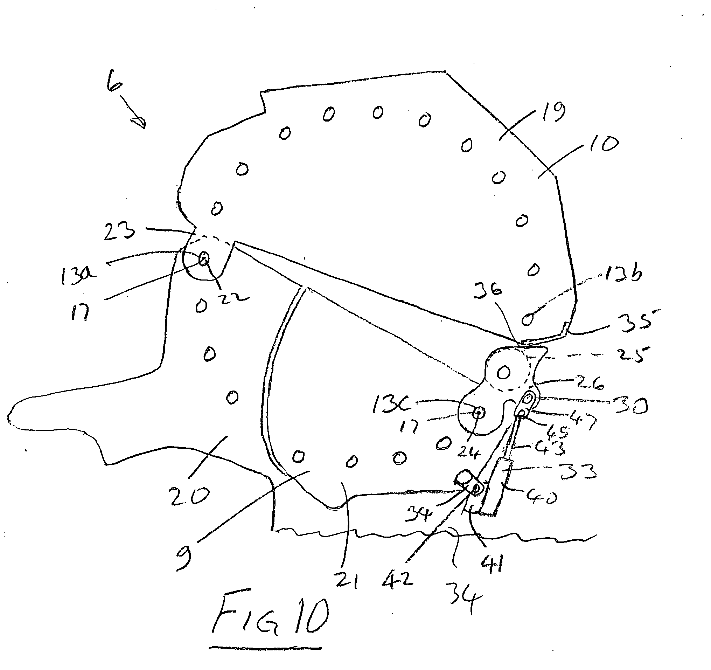

The upper second part 10 of the baler 6 is pivotally coupled to the lower first part 9 about a first pivot axis 22 which is defined by one of the shafts 13, namely, the shaft 13a of the bale rotating roller 15a of the lower first part 9 of the baler 6. The upper second part 10 is pivotal about the first pivot axis 22 relative to the lower first part 9 in the directions of the arrows C and D between a first state illustrated in Figs. 1, 2 and 9 with the first and second parts 9 and 10 defining the bale forming chamber 12 to be of a first volume, and a second state illustrated in Figs. 3 and 10 with the first and second parts 9 and 10 defining with a third part, namely, a bridging element provided by a bridging roller 25 the bale forming chamber 12 to be of a second volume. The diameter of the bale forming chamber 12 of the second volume is greater than the diameter of the bale forming chamber 12 of the first volume, so that the diameter of a bale formed in the bale forming chamber 12 of the second volume is greater than the diameter of a bale formed in the bale forming chamber 12 of the first volume as will be described below.

Pivot mounting brackets 23 extending from the respective upper wall segments 19 of the upper second part 10 pivotally engage the shaft 13a of the bale rotating roller 15a for pivotally coupling the upper second part 10 to the lower first part 9. The shaft 13a of the bale rotating roller 15a is rotatable in the lower fixed wall segment 20.

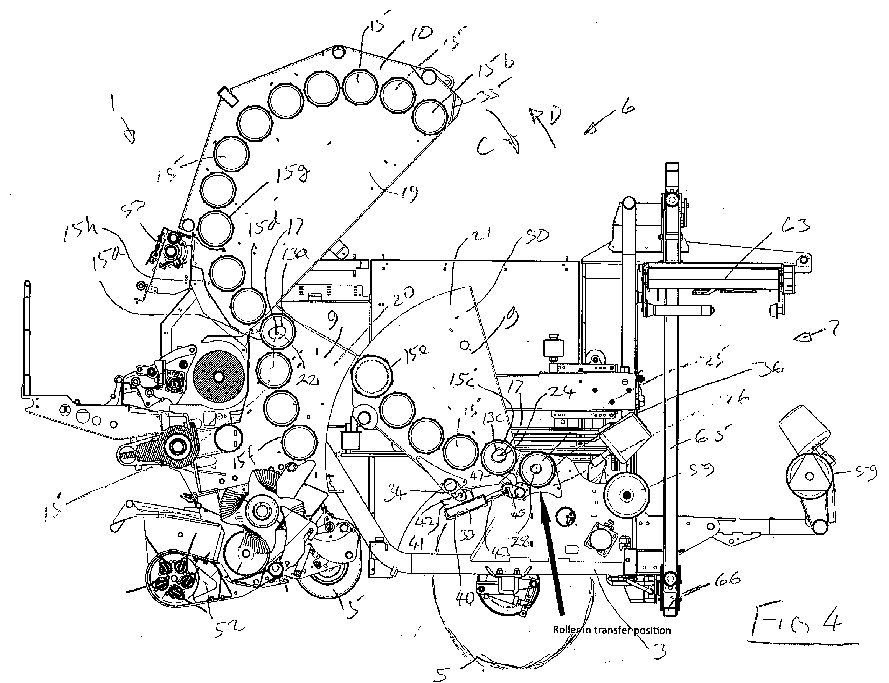

A first drive means, namely, a pair of first hydraulic drive rams 27 operably coupled between the upper wall segments 19 of the upper second part 10 and the chassis 3 on opposite sides of the baler 6 operates the upper second part 10 between the first and second states. The first drive rams 27 also operate the upper second part 10 into a third state, see Fig. 4, as will be described below, for providing access to the bale forming chamber to facilitate discharge of a formed bale from the bale forming chamber 12 to the bale wrapper 7.

In the first state of the upper second part 10 of the baler 6, two adjacent ones of the bale rotating rollers 15 of the first and second parts 9 and 10, namely, the bale rotating roller 15b of the upper second part 10 and the bale rotating roller 15c of the lower first part 9 are substantially adjacent each other, as are the two adjacent bale rotating rollers 15 of the first and second parts 9 and 10 adjacent the pivotal coupling of the upper second part 10 to the lower first part 9, namely, the bale rotating rollers 15a and 15d also adjacent each other. Accordingly, in the first state of the upper second part 10 of the baler 6, the bale rotating rollers 15 of the upper second part 10 and the lower first part 9 substantially define the circumferential periphery 16 of the bale forming chamber 12 which is of the first volume. However, in the second state of the upper second part 10, the bale rotating rollers 15b and 15c of the upper second part 10 and the lower first part 9, respectively, are spaced apart from each other defining a gap G therebetween in the circumferential periphery 16 of the bale forming chamber 12. The bridging roller 25 bridges the gap G between the bale rotating rollers 15b and 15c when the upper second part 10 is in the second state so that the circumferential periphery 16 of the bale forming chamber 12 of the second volume is defined by the bale rotating rollers 15 of the first and second parts 9 and 10 and the bridging roller 25.

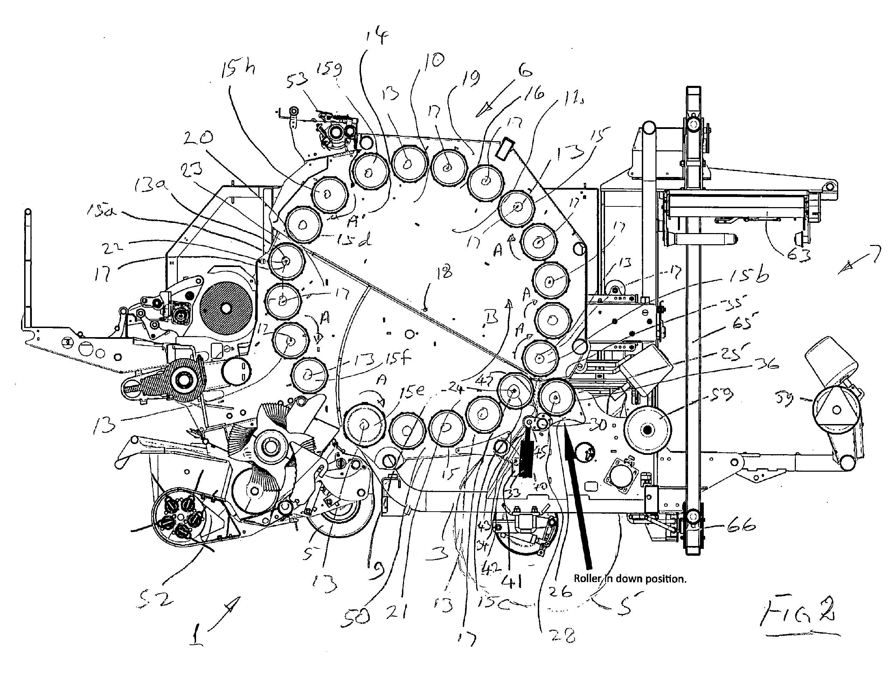

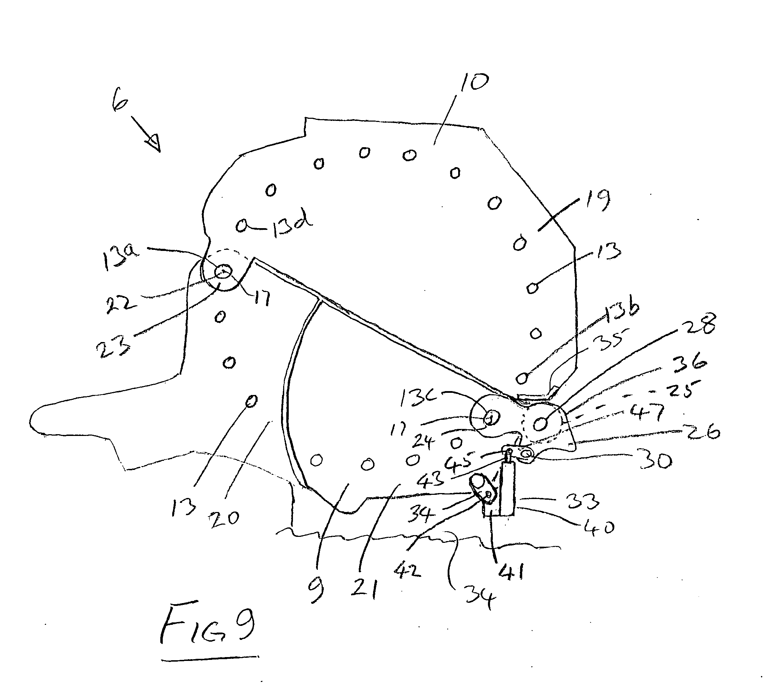

The bridging roller 25 is rotatably carried on a carrier means comprising a pair of spaced apart carrier plate members 26 between which the bridging roller 25 extends. The carrier plate members 26 are pivotally carried on the shaft 13c of the bale rotating roller 15c of the lower first part 9, and are pivotal about a second pivot axis 24 defined by the rotational axis 17 of the bale rotating roller 15c. The carrier plate members 26 are pivotal about the second pivot axis 24 between a bridging state with the bridging roller 25 in a bridging state illustrated in Figs. 3 and 10 bridging the bale rotating rollers 15b and 15c to define the portion of the circumferential periphery 16 of the bale forming chamber 12 between the bale rotating rollers 15a and 15b when the upper second part 10 is in the second state, and an idle state with the bridging roller 25 in an idle state illustrated in Figs. 2 and 9 spaced apart from the bale forming chamber 12 with the upper second part 10 in the first state. A cross-member 30 extending transversely between the carrier plate members 26 rigidly couple the carrier plate members 26 together.

The bridging roller 25 is of diameter similar to the diameter of the bale rotating rollers 15, and is rigidly mounted on a shaft 28, which in turn is rotatably carried in bearings (not shown) in the carrier plate members 26 for facilitating rotating of the bridging roller 25 in the carrier plate members 26. A sprocket 29 on the shaft 28, at one end thereof, is driven by the chain drive (not shown) which drives the sprockets 11 of the bale rotating rollers 15, so that the bridging roller 25 is driven when the bale rotating rollers 15 are driven, and is driven at the same speed and in the same rotational direction as the bale rotating rollers 15. Since the diameter of the bridging roller 25 is similar to the diameter of the bale rotating rollers 15, the surface speeds of the bridging roller 25 and the bale rotating rollers 15 are similar for rotating a bale in the bale forming chamber 12. The bridging roller 25 is of length substantially similar to the length of the bale rotating rollers 15, and accordingly, the bridging roller 25 extends substantially the axial length of the bale forming chamber 12 between the end walls 14 when in the bridging state.

A first urging means for urging the carrier plate members 26 from the idle state to the bridging state, and in turn for urging the bridging roller 25 from the idle state to the bridging state comprises a pair of hydraulic biasing rams 33 which are hydraulically coupled to an hydraulic accumulator 33a which together with the hydraulic rams 33 effectively form a pneumatic spring as will be described below for urging the bridging roller 25 from the idle state into the bridging state. The biasing rams 33 are operably coupled between the carrier plate members 26 and spaced apart support plates 34, which are rigidly secured to and extend from the respective lower moveable wall segments 21 of the lower first part 9 on respective opposite sides of the baler 6. The hydraulic biasing rams 33 act as compression springs and urge and continuously bias the bridging roller 25 from the idle state illustrated in Figs. 2 and 9 into the bridging state illustrated in Figs. 3 and 10 with the bridging roller 25 bridging the gap G between the bale rotating rollers 15b and 15c. A plate bracket 41 rigidly secured to a housing 40 of each hydraulic biasing ram 33 is pivotally coupled to the corresponding support plate 34 on the lower first part 9 by a corresponding pivot pin 42. A piston rod 43 extending from the housing 40 of each hydraulic biasing ram 33 is coupled to a corresponding end of the cross-member 30 through a corresponding link member 47. Pivot pins 45 pivotally couple the piston rods 43 of the hydraulic biasing rams 33 to the respective link members 47 at one end thereof. The other ends of the link members 47 are rigidly coupled to the corresponding ends of the cross-member 30.

A second urging means for urging the carrier plate members 26 and in turn the bridging roller 25 from the bridging state to the idle state against the biasing action of the hydraulic biasing rams 33 comprises a camming means which in this embodiment of the invention comprises a camming element formed by a pair of camming plates 35 which are mounted on the respective upper wall segments 19 of the upper second part 10 of the baler 6 adjacent the bale rotating roller 15b. The camming plates 35 are co-operable with corresponding arcuate cam follower surfaces 36 formed on the respective carrier plate members 26. The camming plates 35 are located on the upper wall segments 19 of the upper second part 10 so that as the upper second part 10 is being pivoted from the second state to the first state, the camming plates 35 engage the cam follower surfaces 36 of the carrier plate members 26 to urge the carrier plate members 26 and in turn the bridging roller 25 from the bridging state to the idle state against the action of the hydraulic biasing rams 33.

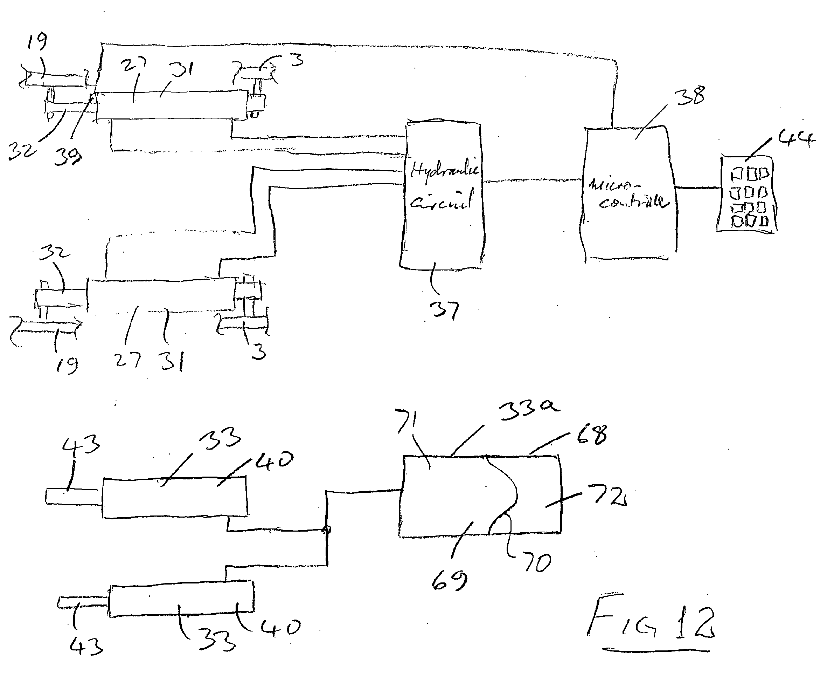

Referring now to Fig. 12, hydraulic fluid is supplied to the first drive rams 27 from an hydraulic circuit 37 for operating the upper second part 10 between the first state and the third state through the second state. A microcontroller 38 controls the operation of the hydraulic circuit 37 for in turn controlling the operation of the first drive rams 27. A transducer 39 on a housing 31 of one of the first drive rams 27 monitors the travel of a piston rod 32 of the corresponding first drive ram 27 to determine the position of the piston rod 32 relative to the housing 31, and in turn to determine the position of the upper second part 10 relative to the lower first part 9, and in turn the state of the upper second part 10.

The microcontroller 38 is responsive to the signals read from the transducer 39 to operate the hydraulic circuit 37 to stop travel of the first drive rams 27 when the upper second part 10 is in a selected one of the first and second states and to retain the upper second part 10 in the selected one of the first and second states. A keypad interface 44 is provided to the microcontroller 38 to permit entry of a selection of the desired one of the first and second states in which the upper second part 10 is to operate to form the bale forming chamber 12 with the lower first part 9. Each time the first drive rams 27 are operating the upper second part 10 of the baler 6 from the third state to the selected one of the first and second states, the microcontroller 38 is responsive to signals from the transducer 39 for operating the first drive rams 27 to stop the upper second part 10 in the selected one of the first and second states.

When the first state of the upper second part 10 is selected, during operation of the baler 6 the first drive rams 27 are operated under the control of the microcontroller 38 to urge the upper second part 10 from the third state into the first state through the second state, and to retain the upper second part in the first state during formation of a bale in the bale forming chamber 12. As the upper second part 10 is being urged from the second state to the first state, the cam follower surfaces 36 of the carrier plate members 26 are engaged by the corresponding camming plates 35 on the upper second part 10 to thereby urge the carrier plate members 26 and in turn the bridging roller 25 against the biasing action of the hydraulic biasing rams 33 from the bridging state to the idle state.

When the second state of the upper second part 10 is selected, during operation of the baler 6 the first drive rams 27 are operated under the control of the microcontroller 38 to urge the upper second part 10 from the third state to the second state, and to retain the upper second part 10 in the second state during formation of a bale in the bale forming chamber. With the upper second part 10 in the second state the bridging roller 25 is retained in the bridging state by the biasing action of the hydraulic biasing rams 33, so that the bridging roller 25 defines with the bale rotating rollers 15 of the first and second parts 9 and 10 the circumferential periphery 16 of the bale forming chamber 12.

Returning now to the lower first part 9 of the baler 6, the portion of the lower first part 9 which is formed by the lower fixed wall segments 20 and the corresponding bale rotating rollers 15 which are rotatably carried in the lower fixed wall segments 20 is fixed relative to the chassis 3. The other portion of the lower first part 9 which is formed by the lower moveable wall segments 21 and the corresponding bale rotating rollers 15 which are rotatably carried on the lower moveable wall segments 21 forms a discharge means, namely, a discharge element 50 for discharging a formed bale from the bale forming chamber 12 onto the bale wrapper 7 when the upper second part 10 of the baler 6 is in the third state. The discharge element 50 is pivotally carried on the shaft 13c of the bale rotating roller 15c, and is pivotal between a bale forming state illustrated in Fig. 2 with the discharge element 50 defining the bale forming chamber 12 with the second part 10, the lower fixed wall segments and the bale rotating rollers 15 which are carried on the lower fixed wall segments 20, and a tipped discharge state illustrated in Fig. 4 for discharging a formed bale from the bale forming chamber 6 onto the bale wrapper 7. In this embodiment of the invention the first drive rams 27 also act as a second drive means for urging the discharge element 50 between the bale forming state and the discharge state. A pair of main link members 49 on opposite sides of the baler 6 couple the discharge element 50 to the upper second part 10, so that as the first drive rams 27 urge the upper second part 10 from the selected one of the first and second states to the third state, the discharge element 50 is urged from the bale forming state to the discharge state, and vice versa. Each main link member 49 is pivotally coupled to the corresponding upper wall segment 19 of the upper second part 10 by a pivot pin 48, and to the corresponding lower moveable segment 21 of the discharge element 50 by a pivot pin 51. Each pivot pin 51 is pivotally and slideably engageable in an elongated slot 54 in the corresponding main link member 49 to permit initial movement of the upper second part 10 from the selected one of the first and second states prior to commencement of movement of the discharge element 50 from the bale forming state.

A pick-up mechanism 52 is mounted on the forward end of the chassis 3 for picking up fodder material to be baled and for delivering the fodder material into the bale forming chamber 12 between bale rotating rollers 15e and 15f which are carried respectively by the lower moveable wall segments 21 and the lower fixed wall segments 20, respectively, of the lower first part 9.

A dispenser 53 mounted on the upper second part 10 of the baler 6 discharges netting or plastics film wrapping material into the bale forming chamber 12 between the bale rotating rollers 15g and 15h of the upper second part 10 for circumferentially wrapping a formed bale in the bale forming chamber 12 to circumferentially bind the bale prior to discharge of the bale from the bale forming chamber 12.

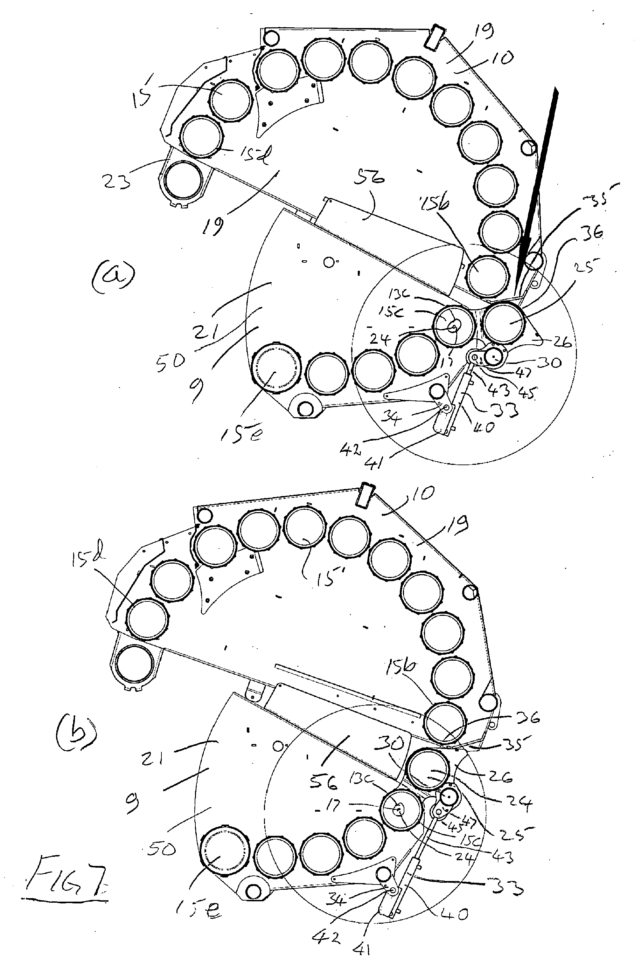

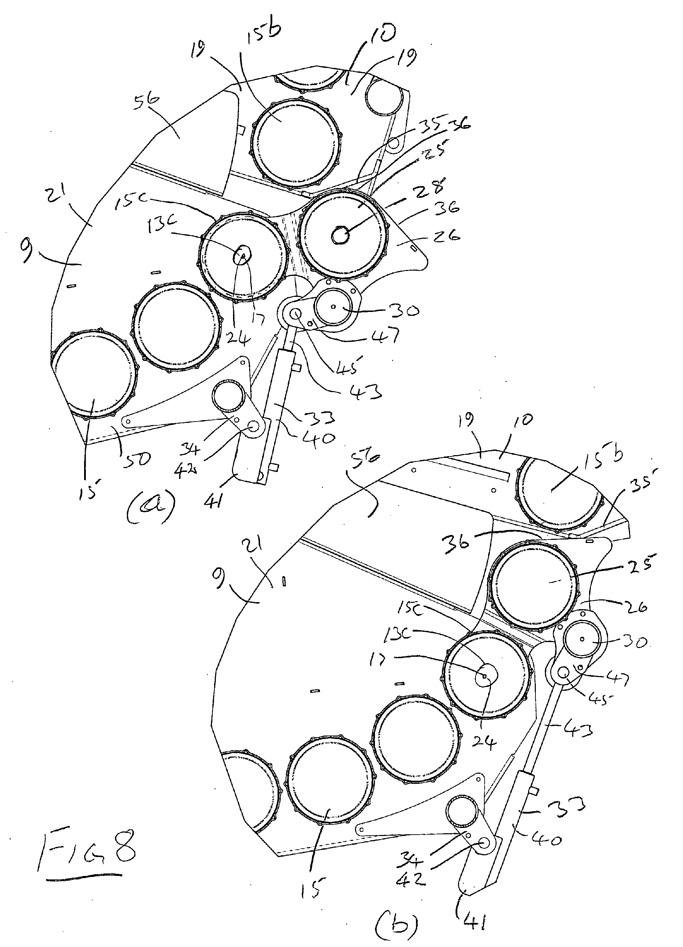

Closure plates 56 secured to the lower moveable wall segments 21 of the first part 9 extend upwardly to overlap with the adjacent ones of the upper wall segments 19 of the upper second part 10, and co-operate with the upper wall segments 19 of the second part 10 to close respective radial gaps 55 between the lower moveable wall segments 21 and the upper wall segments 19 when the upper second part 10 is in the second state forming the bale forming chamber 12 of the second volume, see Figs. 7(a) and 7(b) and Figs. 8(a) and 8(b).

Bale support rollers 59 of the bale wrapper 7 receive a formed bale from the discharge element 50 of the baler 6, and support and rotate the formed bale about a substantially horizontal first wrapping axis, which coincides with the central longitudinal geometrical axis of the bale supported on the bale support rollers 59 during wrapping of the bale. A pair of film material dispensers 63, only one of which is illustrated, are carried on a substantially vertically extending carrier ring 65 which revolves the dispensers 63 about a substantially horizontal second wrapping axis around the bale. The carrier ring 65 is supported on and rotated by a pair of drive rollers 66 for revolving the dispensers 63 about the second wrapping axis and about a bale supported on and rotated by the bale support rollers 59 for wrapping of the bale with the wrapping film material with each turn of the film material overlapping the preceding turn. The film material dispensers 63 are located on the carrier ring 65 spaced apart 180° from each other around the carrier ring 65. The bale wrapper 7 is substantially similar to the bale wrapper of the combined baler/bale wrapper disclosed in PCT published Application Specification No. WO 2007/076183, and further description of the bale wrapper 7 should not be required.

Referring now in particular to Fig. 12, as discussed above, the hydraulic biasing rams 33 are coupled to an hydraulic accumulator 33a in order that the hydraulic biasing rams 33 act as pneumatic springs to bias and urge the bridging roller 25 into the bridging state. The hydraulic accumulator 33a is of the type which comprises a pressure vessel 68 defining a hollow interior region 69. The hollow interior region 69 is divided by a diaphragm 60 into an hydraulic fluid chamber 71 and a gas chamber 72. The gas chamber 72 is pressurised with compressed nitrogen gas. The hydraulic fluid chamber 71 when connected to the biasing rams 33 is pressurised to an appropriate pressure in order that the hydraulic biasing rams 33 bias and urge the bridging roller 25 into the bridging state with an appropriate urging force for retaining the bridging roller 25 in the bridging state during formation of a bale in the bale forming chamber 12 when the upper second part 10 is in the second state to define the bale forming chamber 12 to be of the second volume. Such hydraulic accumulators as the hydraulic accumulator 33a will be known to those skilled in the art.

In use, when it is desired to form a bale of the first diameter, the microcontroller 38 operates the hydraulic circuit 37 to operate the first drive rams 27 to urge the upper second part 10 of the baler 6 between the first and third states. During formation of a bale in the bale forming chamber 12, the second part 10 is retained by the first drive rams 27 in the first state, and the bridging roller 25 is retained in the idle state by the action of the camming plates 35 on the cam follower surfaces 36 of the respective carrier plate members 26 while the upper second part 10 is in the first state. On completion of the formation of the bale in the bale forming chamber 12, with the upper second part 10 still retained in the first state by the first drive rams 27, the dispenser 53 is operated to dispense the netting or film material into the bale forming chamber 12 to circumferentially wrap and bind the formed bale in the bale forming chamber 12. On completion of the circumferential wrapping of the bale in the bale forming chamber 12, the first drive rams 27 are operated to urge the upper second part 10 from the first state to the third state for facilitating discharge of the bale from the bale forming chamber 12. After initial movement of the upper second part 10 from the first state, as the upper second part 10 is being urged towards the third state, the main link members 49 commence to urge the discharge element 50 from the bale forming state to the discharge state to discharge the bale from the bale forming chamber 12 onto the bale support rollers 59 of the bale wrapper 7. Wrapping of the bale on the bale wrapper 7 then commences with the bale being wrapped end to end with overlapping turns of the wrapping film. Once the bale has been discharged onto the bale wrapper 7, the first drive rams 27 are operated for urging the upper second part 10 from the third state to the first state, and for retaining the upper second part 10 in the first state during formation of the next bale. As the upper second part 10 is being returned to the first state, the discharge element 50 is returned to the bale forming state by the action of the main link members 49.

The formation of the next bale to be formed commences in the bale forming chamber 12, while the bale which has just been discharged onto the bale wrapper 7 is wrapped thereon.

Each time the upper second part 10 is urged from the third state to the first state, the camming plates 35 on the upper wall segments 19 of the upper second part 10 engage the cam follower surfaces 36 of the respective carrier plate members 26 just as the upper second part 10 has passed through the second state. On further urging of the upper second part 10 from the second state to the first state, the camming plates 35 bear on the corresponding cam follower surfaces 36 of the carrier plate members 26 for urging the bridging roller 25 from the bridging state to the idle state against the action of the hydraulic biasing rams 33, in order to allow the upper second part 10 to pivot into the first state with the bale rotating rollers 15b and 15c adjacent each other.

When it is desired to form a bale of the second diameter, the first drive rams 27 under the control of the microcontroller 38 urge the upper second part 10 between the second state and the third state. On the upper second part 10 being pivoted from the third state to the second state, on reaching the second state, the first drive rams 27 under the control of the microcontroller 38 retain the upper second part 10 in the second state. In the second state, the camming plates 35 of the upper second part 10 and the cam follower surfaces 36 of the carrier plate members 26 remain disengaged from each other, and the bridging roller 25 is retained in the bridging state by the biasing action of the hydraulic biasing rams 33 bridging the gap G between the bale rotating rollers 15b and 15c. On completion of the formation of a bale in the bale forming chamber 12, the dispenser 53 is operated to dispense the netting or film material into the bale forming chamber 12 to circumferentially wrap and bind the formed bale in the bale forming chamber 12. The upper second part 10 is then urged by the first drive rams 27 from the second state to the third state, and as the upper second part 10 is being urged towards the third state, the discharge element 50 is urged from the bale forming state to the discharge state as already described to discharge the formed bale from the bale forming chamber 12 onto the bale wrapper 7, where the bale is wrapped end to end with overlapping turns of the wrapping film. The first drive rams 27 are operated under the control of the microcontroller 38 to return the upper second part 10 from the third state to the second state, and to return the discharge element 50 from the discharge state to the bale forming state. The first drive rams 27 again retain the upper second part 10 in the second state with the discharge element 50 in the bale forming state. The bridging roller 25 is retained in the bridging state by the biasing rams 33 to form the next bale in the bale forming chamber 12.

While the next bale is being formed in the bale forming chamber 12, the bale just discharged from the baler 6 onto the bale wrapper 7 is wrapped by the bale wrapper 7.

While the baler of the combined baler/bale wrapper according to the invention has been described as comprising a baler in which the bale forming chamber is formed by a lower first part and an upper second part, and the lower first part is described as being formed by a fixed part and a lower moveable part, while this is desirable, it is not essential. It is envisaged that the baler may be provided with one of the first part and a second part a completely fixed part, and the other one of the first and second parts a moveable part, in which case a separate discharge means would be provided for discharging the bale from the bale forming chamber, which could be a bar or a series of bars located parallel with and between the bale rotating rollers 15 in the fixed part, which would be urged upwardly inwardly into the bale forming chamber for discharging a formed bale therefrom.

It will also be appreciated that the lower first part could be adapted to be operable for dropping the bale downwardly from the bale forming chamber, and in which case the upper second part would be moveable between the first and second states only.

While the bridging element has been described as comprising a driven bridging roller, while it is desirable that the bridging roller be driven to rotate, this is not essential. The bridging roller may be an idler roller, which would rotate with the bale. Additionally, any other suitable bridging element may be provided besides a bridging roller. For example, the bridging element may be provided by a bridging plate which would define the circumferential periphery of the bale forming chamber with the bale rotating rollers of the first and second parts. It will also be appreciated that the bridging element may be urged from the idle state to the bridging state by any other suitable means besides hydraulic rams configured as biasing rams, and in certain cases, the bridging element may be positively urged both from the idle state to the bridging state and from the bridging state to the idle state by, for example, a drive ram or rams.

It will also be appreciated that the bridging element instead of comprising one bridging roller, could be provided with two parallel bridging rollers, and if the two bridging rollers were of similar diameter and of diameter similar to the bale rotating rollers, then the gap defined between the first and second parts when the moveable one of the first and second parts is in the second state would substantially correspond to the sum of the diameters of two bale rotating rollers. This would permit an even larger diameter bale to be formed in the bale forming chamber when the second part of the baler is in the second state. Further, it is envisaged that the second part of the baler may be operable in the bale forming state in more than just a first state and a second state, whereby in the first state the bale forming chamber would be of a first volume, in the second state the bale forming chamber would be of a second volume, and in a further state, for example, an intermediate state in which the volume of the bale forming chamber would be of an intermediate volume, which would be a volume of size lying between the first and second volumes. In which case, it is envisaged that the bridging element would be of adjustable size in order to bridge the gap of different sizes between the first and second parts, or alternatively, two or more bridging elements would be provided. The bridging elements would be independently and selectively moveable into the bridging state, so that, for example, one of the bridging elements would bridge the gap between the first and second parts to define the bale forming chamber of the intermediate volume, and two of the bridging elements would bridge the gap between the first and second parts to define the bale forming chamber of the second volume.

It is also envisaged that the second part of the baler may be operable in a plurality of intermediate states to form the bale forming chamber of a number of intermediate volumes of different sizes which would be of volumes lying between the first and second volumes. In which case, the bridging element would be of an adjustable size to bridge the gap of different sizes between the first and second parts, and/or alternatively, an appropriate number of bridging elements would be provided whereby the bridging elements would be independently and selectively moveable into the bridging state to bridge the gap of different sizes between the first and second parts.

It is also envisaged that where the second part is operable in the intermediate states between the first and second states to form the bale forming chamber to be of different intermediate volumes as well as the first and second volumes, the second part 10 could be operable by the first drive ram into intermediate states between the first and second states. In which case, the microcontroller would be responsive to the signals from the transducer on the one of the first drive rams in order to control the hydraulic fluid to the first drive rams to maintain the first drive rams with the second part 10 in a selected one of the intermediate states between the first and second states with the volume of the bale forming chamber being of the selected intermediate value between the first and second volume values. Indeed, it will be appreciated that the number of intermediate states in which the second part could be maintained by the first drive rams between the first and second states is essentially infinite. It is also envisaged that when the second part is maintained in one or some of intermediate states between the first state and the second state by the first drive rams, the position of the bridging element in the bridging state relative to the bale forming chamber could be controlled by the camming plates and the cam follower surfaces of the carrier plate members, or by any other urging means, so that depending on the position of the bridging element in the bridging state, the amount of bridging of the bridging element would vary to take account of the gap of different sizes between the first and second parts.

It will also be appreciated that instead of the second part being moveable, the second part could be fixed and the first part could be moveable for defining the bale forming chamber of the different volumes.

It is also envisaged that instead of the first part forming a lower portion of the baler, and the second part forming an upper portion of the baler, the first part could form a forward part of the baler, while the second part would form a rearward part of the baler. The second part could then be pivotally coupled to the first part adjacent the top thereof about a horizontally extending first pivot axis, and the second part would then be pivotal about the first pivot axis between the first and second states, and the third part would be engageable between the first and second parts adjacent the lower ends of the first and second parts. In which case, it is envisaged that the first part could be a completely fixed part, and the second part as well as being pivotal about the first pivot axis between the first and second states, would also be pivotal into a third discharge state to allow a bale drop downwardly from the first part onto the ground, or onto a low level bale wrapper, or alternatively, onto a transfer mechanism which would transfer the bale dropped from the first part onto a bale wrapper of a combined baler/bale wrapper. Indeed, it is envisaged that the first and second parts could join along a substantially vertically extending plane which would extend transversely of the normal direction of motion of the baler, or the first and second parts could join along a transversely extending plane slightly inclined to the vertical and extending upwardly in either a generally forwardly direction or a generally rearwardly direction.

While the baler has been described as comprising a part of a combined baler/bale wrapper, it is envisaged that the baler could be provided as a baler on its own without the bale wrapper.

It is also envisaged that the bridging element, instead of being pivotally carried on the first part could be moveably mounted in any other manner besides pivoting. Additionally, it is envisaged that the bridging element may be pivotally mounted on either the first part or the second part, and in which case, where a camming means is provided for urging the bridging element from the bridging state to the idle state, the camming element would be provided on the other one of the first and second parts. Needless to say, the bridging element may be coupled to either the first part or the second part to be moveable between the bridging state and the idle state by any other coupling means besides pivotal coupling. In certain cases it is also envisaged that the bridging element may be coupled directly or indirectly to the chassis.

It is also envisaged that in cases where the bridging element is positively urged between the bridging state and the idle state by, for example, an hydraulic or other such drive ram, the carrier means of the bridging element could be adapted to act as an abutment means for abutting the moveable part of the baler, so that the carrier means would determine whether the bale forming chamber is to be of the first or second volume or an intermediate volume, as the case may be. In other words, when the carrier means would be positively urged into the bridging state, the moveable part of the baler could only be urged between the third state and the second state or a selected intermediate state. On the other hand, when the carrier means of the bridging element is urged by the drive ram or other suitable positive driving means from the bridging state to the idle state, the moveable part of the baler would be urged between the third state and the first state.

It is also envisaged that the third part may be provided in other forms besides a bridging element or a bridging roller.

It is also envisaged that other suitable carrier means besides a pair of carrier plates may be provided for carrying the bridging element, be it a bridging plate, a bridging roller or any other suitable third part which would be suitable for defining the relevant portion of the bale forming chamber.

While the baler has been described as being an agricultural baler for baling fodder material, such as, for example, silage, hay, straw and the like, it is envisaged that the baler may be provided for baling any material which would be suitable for baling. For example, it is envisaged that the baler may be adapted for baling cotton. The baler may also be adapted for baling waste material or any other baleable material.

While the baler according to the invention has been described as comprising a roller baler, it is envisaged that the baler may be a belt baler or a baler of the type comprising belts and bale rotating rollers.

## Claims

1. A baler for forming material into a cylindrical bale, the baler comprising a first part (9) and a second part (10), the first and second parts (9,10) defining a substantially cylindrical bale forming chamber (12) within which a bale is formed, **characterised in that** one of the first part (9) and the second part (10) is moveable relative to the other one of the first part (9) and the second part (10) between a first state defining with the said other one of the first part (9) and the second part (10) the bale forming chamber (12) of a first volume, and a second state defining with the said other one of the first part (9) and the second part (10) the bale forming chamber (12) of a second volume, the second volume being greater than the first volume, and a third part (25) is provided, and is moveable into a bridging state located between the first part (9) and the second part (10) when the one of the first and second parts (9,10) is in the second state to define a portion of the bale forming chamber (12) of the second volume.

2. A baler as claimed in Claim 1 **characterised in that** the first and second parts (9,10) define respective portions of the circumferential periphery (16) of the bale forming chamber (12), and the first and second parts (9,10) define a gap (G) in the circumferential periphery (16) of the bale forming chamber (12) when the moveable one of the first and second parts (9,10) is in the second state, the third part (25) being adapted to define a portion of the circumferential periphery (16) of the bale forming chamber (12) adjacent the gap (G) in the bridging state.

3. A baler as claimed in Claim 1 or 2 **characterised in that** the third part (25) comprises an elongated bridging element adapted to extend along substantially the entire axial length of the bale forming chamber (12).

4. A baler as claimed in any preceding claim **characterised in that** the third part (25) comprises at least one rotatably mounted bridging roller (25).

5. A baler as claimed in any preceding claim **characterised in that** the third part (25) is moveable between an idle state and the bridging state.

6. A baler as claimed in Claim 5 **characterised in that** the third part (25) is moveable from the idle state to the bridging state in response to the moveable one of the first and second parts (9,10) being in the second state.

7. A baler as claimed in Claim 5 or 6 **characterised in that** a first urging means (33) is provided for urging the third part (25) into the bridging state.

8. A baler as claimed in any of Claims 5 to 7 **characterised in that** a second urging means (35,36) is provided for urging the third part (25) into the idle state.

9. A baler as claimed in Claim 8 **characterised in that** the second urging means (35,36) comprises a camming means (35,36).

10. A baler as claimed in any of Claims 7 to 9 **characterised in that** the third part (25) is carried on a pivotally mounted carrier means (26).

11. A baler as claimed in Claim 10 **characterised in that** the carrier means (26) is pivotally coupled to one of the first part (9) and the second part (10).

12. A baler as claimed in any preceding claim **characterised in that** the moveable one of the first and second parts (9,10) is moveable from the first state through the second state to a third state to provide access to the bale forming chamber (12) for discharging a formed bale from the bale forming chamber (12).

13. A baler as claimed in any preceding claim **characterised in that** a plurality of rotatably mounted bale rotating rollers (15) are carried on the first and second parts (9,10), the bale rotating rollers (15) of the first part (9) and the second part (10) defining the respective portions of the circumferential periphery (16) of the bale forming chamber (12), one of the bale rotating rollers (15) of the first part (9) defining with an adjacent one of the bale rotating rollers (15) on the second part (10) the gap (G) in the circumferential periphery (16) of the bale forming chamber (12) when the moveable one of the first and second parts (9,10) is in the second state.

14. A baler as claimed in any preceding claim **characterised in that** a portion of the one of the first and second parts (9,10) which is not the moveable one of the first and second parts (9,10) comprises a discharge means (50) for discharging a formed bale from the bale forming chamber (12).

15. A combined baler/bale wrapper comprising a baler (6) as claimed in any preceding claim mounted on a chassis (3), and a bale wrapper (7) mounted on the chassis (3) and adapted to receive a formed bale from the baler (6) for wrapping thereof.
